# EUROPEAN PATENT APPLICATION

(11) **EP 3 171 438 A1**
(43) Date of publication of application: **24.05.2017**
(21) Application number: 14897567.5
(22) Date of filing: 17.07.2014
(51) Int. Cl.: H01M 8/02, H01M 8/04, H01M 8/12

(54) **STACKED STRUCTURE OF PLATE TYPE SOLID OXIDE FUEL CELL AND SOLID OXIDE FUEL CELL SYSTEM**

(71) Applicant: FCO Power, Inc., Nagoya-shi, Aichi 464-0858 (JP)
(72) Inventor: SHIMADA Shu, Nagoya-shi Aichi 464-0858 (JP)
(74) Representative: Leeming, John Gerard
(86) International application number: PCT/JP2014/069093
(87) International publication number: WO 2016/009542

(57) **Abstract**

A stack structure for a planar solid oxide fuel cell is provided in the present specification, the stack structure including: one or two or more stacks in which two or more cells each having an anode, a solid electrolyte, and a cathode are laminated via a separator, the one or two or more stacks including: an anode gas flow channel which supplies anode gas to the anode; a cathode gas flow channel which supplies cathode gas to the cathode; and a cooling gas flow channel which is independent of the cathode gas flow channel, wherein the cooling gas flow channel supplies cooling gas to at least one of opposing surfaces of the cells of the one or two or more stacks in a laminating direction.

## Description

### Technical Field

The present specification relates to a stack structure for a planar solid oxide fuel cell and a system for a solid oxide fuel cell.

### Background Art

In a solid oxide fuel cell (SOFC), thermal energy is generated in an amount comparable to an amount of energy obtained by power generation. It is important to appropriately remove thermal energy generated inside a stack of a plurality of laminated cells by cooling so that a constant temperature is maintained.

While an operating temperature of an SOFC is generally high with a range from 600°C to 1000°C, unless the thermal energy generated inside the stack is appropriately removed by cooling, a rise in stack temperature causes damage to the stack and shortens service life. In addition, power generation performance is highly dependent on operating temperature. Therefore, a drop in temperature due to excessive cooling results in a decline in power generation performance.

Generally, in an SOFC, air (or oxidation gas) necessary for power generation and air necessary for cooling are supplied at the same time. In a parallel planar SOFC, air is supplied to a gas flow channel formed in cells. For example, it is described that an air gas flow channel is provided in a separator arranged between single cells (Patent Literature 1). In addition, it is described that a flow channel of oxidation gas is actively utilized as a cooling plate by giving the flow channel a special shape (Patent Literature 2).

### Citation List

Patent Literature 1: Japanese Patent Application Laid-open No. 2006-85982
Patent Literature 2: Japanese Translation of PCT Application No. 2010-533936

### Summary of Invention

Generally, an SOFC system includes a large number of auxiliary machines and generated power is also consumed to operate these auxiliary machines. Among such auxiliary machines, an air blower has largest power consumption. Therefore, reducing the power consumption of the blower is important for efficiently operating the SOFC.

A blower uplifts air to prescribed pressure and sends a necessary amount of air into the stack using a pressure difference between an inlet and an outlet of the stack. The power consumption of the blower is dependent on a product of uplift pressure and an amount of air. Therefore, reducing the uplift pressure or reducing the amount of air is effective for reducing the power consumption of the blower.

Reduction of uplift pressure requires reducing air resistance of a flow channel. Friction against a bottom surface and a ceiling surface of a flow channel is a major factor of air resistance and, accordingly, air resistance is highly dependent on a height of the flow channel. Therefore, the height of the flow channel must be increased as compared to a conventional height (around 0.5 to 1 mm). However, increasing the height of the flow channel increases a volume of a cell and, consequently, a volume of the stack and is detrimental to volume saving.

Generally, since cathode gas necessary for power generation and air necessary for cooling are sent into a same flow channel, an amount of air must be considered for each of these two roles. However, normally, given that cooling an SOFC with air requires a gas flow rate that is three to five times an amount of air necessary for power generation and that it is difficult to reduce the amount of air necessary for power generation itself, reducing the amount of air for cooling is conceivably effective. To this end, cooling performance by air must be improved, which may be mainly achieved by increasing (1) a temperature difference between air and the stack, (2) an amount of air per unit time, and (3) a heat exchange rate of air and the stack.

However, when the cathode gas for power generation and the air for cooling use the same flow channel, reducing the temperature of air in order to improve cooling efficiency causes a temperature in a vicinity of an inlet of a cathode flow channel to decline and a large temperature distribution is generated inside the stack.

The present specification provides a compactified SOFC and an SOFC system while efficiently cooling the SOFC.

As a result of intensive studies on efficient SOFC cooling methods, the present inventors have found that the problem described above can be solved by separating a flow channel of cathode gas necessary for power generation from a flow channel of cooling gas and, at the same time, cooling a stack created by laminating a plurality of cells from outside of the stack by a prescribed method. Based on these findings, the present specification provides the following means.
(1) A stack structure for a planar solid oxide fuel cell, including:
   one or two or more stacks in which two or more cells each having an anode, a solid electrolyte, and a cathode are laminated via a separator,
   the one or two or more stacks including:
      a fuel gas flow channel which supplies anode gas to the anode;
      a cathode gas flow channel which supplies cathode gas to the cathode; and
      a cooling gas flow channel which is independent of the cathode gas flow channel,
   wherein
   the cooling gas flow channel supplies cooling gas to at least one of opposing surfaces of the cells of the one or two or more stacks in a laminating direction.
(2) The stack structure according to (1), wherein the cooling gas flow channel is configured to directly cool the one surface of the stack with cooling gas.
(3) The stack structure according to (1) or (2), wherein the cooling gas flow channel is also provided on another one of the surfaces, which opposes the one surface of the one or two or more stacks.
(4) The stack structure according to (3), wherein two cooling gas flow channels which oppose each other via the stack are configured so that the cooling gases passing through the cooling gas flow channels are approximately parallel to each other and flow in directions with different orientations.
(5) The stack structure according to (4), wherein the cooling gases are configured so as to flow in orientations approximately opposite to each other.
(6) The stack structure according to any of (1) to (5), wherein the cooling gas flow channel is provided as a gap between two laminated stacks.
(7) The stack structure according to any of (1) to (6), wherein the stack has on a surface thereof a metallic mesh collector.
(8) The stack structure according to any of (1) to (7), wherein the stack has a collector including a metallic linear body having on a surface thereof an oxidation-resistant coating.
(9) The stack structure according to any of (1) to (8), wherein the stack is configured by integrally sintering a plurality of cells.
(10) The stack structure according to any of (1) to (9), wherein the two or more stacks are integrated by a ceramic support.
(11) The stack structure according to any of (1) to (10), wherein a height of the cooling gas flow channel is 2 mm or more and 8 mm or less.
(12) The stack structure according to any of (1) to (11), wherein a thickness of the stack is 20 mm or less.
(13) The stack structure according to any of (1) to (12), wherein the two or more stacks are planarly arranged.
(14) A system for s planar solid oxide fuel cell, wherein
   the solid oxide fuel cell has a planar stack structure including one or two or more stacks in which two or more cells each having an anode, a solid electrolyte, and a cathode are laminated via a separator, and
   power at an operating temperature of 600°C or higher and 1000°C or lower is generated while cooling the stack by directly bringing cooling gas, which is substantially independent of cathode gas, into contact with at least one of opposing surfaces of the cells in the stack structure in a laminating direction.
(15) The system according to (14), which is configured to supply the cooling gas at a temperature, which is lower than a highest temperature of the stack, by 100°C or more.
(16) The system according to (15), which is configured to supply the cooling gas at a temperature, which is lower than the highest temperature, by 150°C or more.
(17) The system according to (16), which is configured to supply the cooling gas at a temperature, which is lower than the highest temperature, by 200°C or more.
(18) An operating method for a planar solid oxide fuel cell,
   the solid oxide fuel cell each having a planar stack structure including one or two or more stacks in which two or more cells having an anode, a solid electrolyte, and a cathode are laminated via a separator,
   the method including cooling the stack by directly bringing cooling gas, which is substantially independent of cathode gas, into contact with at least one of opposing surfaces of the cells in the stack in a laminating direction.

### Brief Description of Drawings

FIG. 1 is a diagram showing an outline of a stack structure according to the present disclosure;
FIG. 2 is a diagram showing a structure of a stack suitable for a stack structure according to the present disclosure;
FIG. 3A is a diagram showing an evaluation result with respect to an orientation of cooling gas and a cooling effect;
FIG. 3B is a diagram showing an evaluation result with respect to an orientation of cooling gas and a cooling effect;
FIG. 4 is a diagram showing an evaluation result with respect to a number of laminated cells in a stack and temperature distribution;
FIG. 5 is a diagram showing an evaluation result with respect to a height of a cooling gas flow channel and temperature distribution; and
FIG. 6 is a diagram showing an evaluation result with respect to a height of a cooling gas flow channel and temperature distribution.

### Description of Embodiments

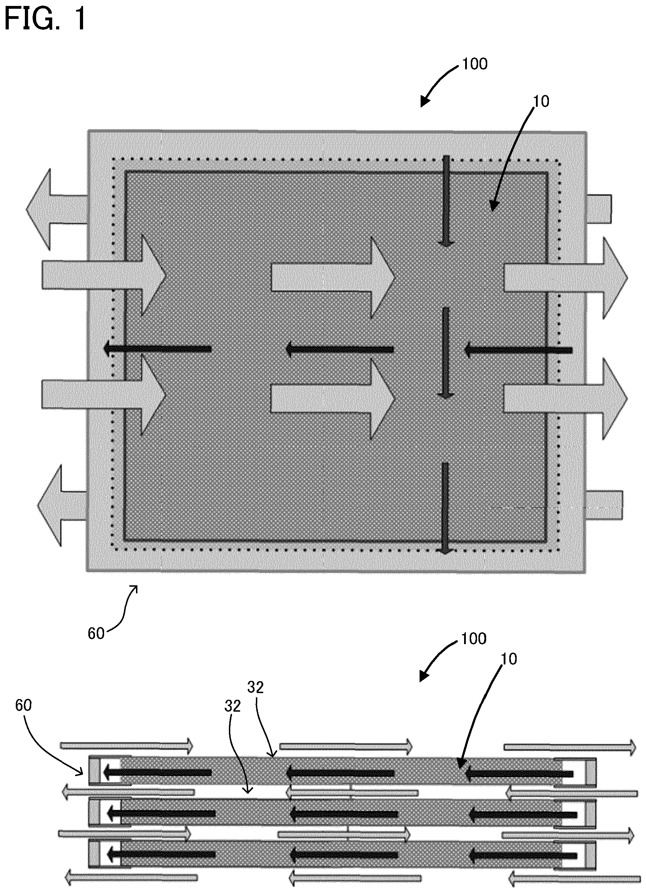

The present specification relates to a planar SOFC structure, an SOFC system, and the like. According to the SOFC disclosed in the present specification, as illustrated in FIG. 1, cooling a stack by supplying cooling gas which is substantially independent of cathode gas to at least one surface arranged in a laminating direction of the stack enables the SOFC to be efficiently cooled and, at the same time, enables the SOFC to be compactified.

In other words, by configuring the cooling gas to be substantially independent of the cathode gas, there is no need to make a cathode gas flow channel larger than a size which enables an amount of gas necessary for power generation to be supplied and, at the same time, a sufficient temperature difference can be secured between a highest temperature of the stack and the cooling gas by preventing the temperature of the stack in a vicinity of an inlet of the cooling gas from dropping. In addition, since a flow channel of such cooling gas passes through an entire power generating surface of the stack, there is smaller pressure loss than the cathode gas flow channel and uplift pressure of a blower can be reduced.

Furthermore, by directly supplying the cooling gas to a surface of the stack, cooling can be performed more efficiently. In this case, in order to enhance a heat exchange rate between the stack surface and the cooling gas, a metallic collector is desirably arranged on the stack surface. Moreover, by substantially not including a support layer and adopting a laminated support-type integrally-sintered stack with superior adhesion between respective layers, the stack can be cooled in an even more efficient and uniform manner.

Hereinafter, a representative and non-limiting specific example of the present disclosure will be described in detail with reference to the drawings as appropriate. The detailed description is intended to present a person having ordinary skill in the art with details for implementing a favorable example of the present disclosure and is not intended to limit the scope of the present disclosure. In addition, additional features and inventions disclosed below can be used separately from, or together with, other features and inventions in order to provide a further improved stack structure of an SOFC and an SOFC system.

Furthermore, combinations of features and processes disclosed in the following detailed description are not essential for implementing the present disclosure in its broadest sense and are described for the sole purpose of presenting a representative specific example of the present disclosure. Moreover, when providing additional and useful embodiments of the present disclosure, various features of the representative specific example described above and below and various features of the invention described in the independent and dependent claims need not be combined according to the specific example described herein or according to an order of enumeration.

Apart from configurations of features described in the examples and/or the claims, all of the features described in the present specification and/or the claims are intended to be disclosed individually and independently of one another as limitations on specific matters disclosed and claimed as originally filed. In addition, all descriptions related to ranges, groups, or collections of numerical values populations have been made as limitations on specific matters disclosed and claimed as originally filed, with intent to disclose intermediate configurations thereof.

### (Stack structure of planar SOFC)

As shown in FIG. 1, a stack structure 100 of a planar SOFC according to the present disclosure can include one or two or more stacks 10. The stack structure 100 may include a plurality of the stacks 10 in a laminating direction of cells 20 in the planar SOFC. Alternatively, the stack structure 100 may include a plurality of stacks 10 arranged in a planar direction of the planar cell 20. Arrangement forms of the stack 10 are not particularly limited and the stack 10 may be arrayed in a single row or a plurality of rows.

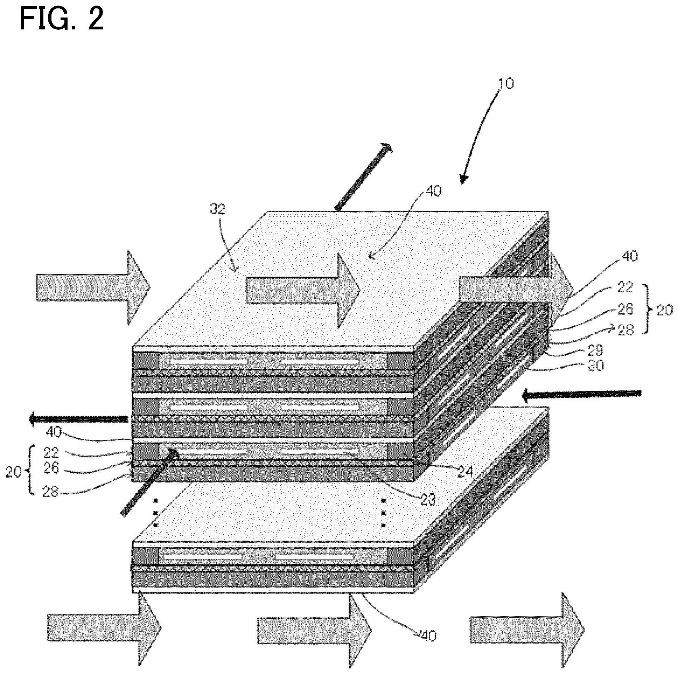

As shown in FIG. 2, the stack 10 according to the present disclosure can include a plurality of cells 20. The cell 20 includes an anode 22, a solid electrolyte 26, and a cathode 28. These elements each have a planar shape and are laminated so as to match flat surfaces thereof to construct a single cell 20. The stack 10 is constructed by having such single cells 20 laminated in plurality in a laminating direction of the respective elements.

Planar forms of the stack 10 and the cell 20 are not particularly limited and a quadrangular shape such as a square shape, a circular shape, or a ring shape can be adopted.

### (Anode)

The anode 22 may have various shapes such as a square shape, a rectangular shape, or a circular shape depending on the planar form of the stack 10. The anode 22 may be constituted by a known anode material. Examples include mixtures of metal catalysts with ceramic powder materials consisting of oxide-ion conductors, and composite powders thereof. Examples of metal catalysts that can be used in this case include nickel, iron, cobalt, precious metals (platinum, ruthenium, palladium, and the like) and other materials that are stable in reducing atmospheres and have hydrogen oxidation activity. In addition, oxide-ion conductors having fluorite structures or perovskite structures can be preferably used as oxide-ion conductors. Examples of oxide-ion conductors having fluorite structures include ceria oxides doped with samarium, gadolinium, or the like and zirconia oxides containing scandium or yttrium. Examples of oxide-ion conductors having perovskite structures include lanthanum-gallate oxides doped with strontium or magnesium. Of these materials, the anode 22 is preferably formed by a mixture of an oxide-ion conductor and nickel. In addition, of the aforementioned ceramic materials, one may be used alone or a mixture of two or more can be used. Furthermore, the anode 22 can be constituted solely by a metal catalyst.

Considering that, for example, integration is be to performed by integrally sintering the cell 20 and the stack 10, a thermal expansion coefficient (20°C to 1000°C) of the anode 22 is preferably 10 × 10⁻⁶ K⁻¹ or higher and 12.5 × 10⁻⁶ K⁻¹ or lower. This is because peeling is less likely to occur at an interface with the solid electrolyte 26 within this range. Considering residual stress of the stack 10, 10 × 10⁻⁶ K⁻¹ or higher and 12 × 10⁻⁶ K⁻¹ or lower is more preferable. In addition, while a thickness of the anode 22 is not particularly limited, in consideration of the integration described above, the thickness of the anode 22 can be 1 µm or more and 500 µm or less. Within this range, suitable mechanical strength and power generating characteristics can be obtained when the single cell 20 is constructed and also when the stack 10 is constructed with separators 40. 2 µm or more and 300 µm or less is more preferable, 150 µm or more and 250 µm or less is even more preferable, and 180 µm or more and 230 µm or less is particularly preferable. The anode 22 includes an anode gas flow channel 23 and an anode gas seal part 24. These elements will be described later.

### (Solid electrolyte)

The solid electrolyte 26 may also have various shapes such as a square shape, a rectangular shape, or a circular shape depending on the planar form of the stack 10. As the solid electrolyte 26, a known solid electrolyte commonly used in SOFCs may be used. Examples include ceria oxides doped with samarium, gadolinium, or the like, lanthanum-gallate oxides doped with strontium or magnesium, zirconia oxides containing scandium or yttrium and other oxide ion conducting ceramics materials.

Considering that, for example, integration is to be performed by integrally sintering the cell 20 and the stack 10, a thermal expansion coefficient (20°C to 1000°C) of the solid electrolyte 26 is preferably 10 × 10⁻⁶ K⁻¹ or higher and 12 × 10⁻⁶ K⁻¹ or lower. This is because peeling and cracking are less likely to occur during firing within this range. In addition, considering residual stress of the stack structure 100, 10.5 × 10⁻⁶ K⁻¹ or higher and 11.5 × 10⁻⁶ K⁻¹ or lower is more preferable.

While a thickness of the solid electrolyte 26 is not particularly limited, in consideration of the integration described above, the thickness of the solid electrolyte 26 can be 1 µm or more and 150 µm or less. Within this range, suitable mechanical strength and power generating characteristics can be obtained when the single cell 20 is constructed together with the anode 22 and the cathode 28 to be described later and also when the stack 10 is constructed with separators 40. 1 µm or more and 100 µm or less is more preferable, 1 µm or more and 40 µm or less is even more preferable, and 1 µm or more and 20 µm or less is particularly preferable.

### (Cathode)

The cathode 28 may have various shapes such as a square shape, a rectangular shape, or a circular shape depending on the planar form of the stack 10. As a cathode material constituting the cathode 28, known materials used as cathode materials in solid oxide fuel cells can be used without any particular limitations. For example, metal oxides with perovskite structures and the like and made of Co, Fe, Ni, Cr, Mn, or the like can be used. Specific examples include oxides of(Sm,Sr)CoO₃, (La,Sr)MnO₃, (La,Sr)CoO₃, (La,Sr)(Fe,Co)O₃, (La,Sr)(Fe,Co,Ni)O₃, and the like, of which (La,Sr)MnO₃ is preferred. One of the aforementioned ceramic materials can be used alone, or two or more may be used in combination.

Considering that, for example, integration is to be performed by integrally sintering the cell 20 and the stack 10, a thermal expansion coefficient (20°C to 1000°C) of the cathode 28 is preferably 10 × 10⁻⁶ K⁻¹ or higher and 15 × 10⁻⁶ K⁻¹ or lower. This is because peeling is less likely to occur at an interface with the solid electrolyte 26 within this range. Considering residual stress of the stack 10, 10 × 10⁻⁶ K⁻¹ or higher and 12 × 10⁻⁶ K⁻¹ or lower is more preferable. In addition, while a thickness of the cathode 28 is not particularly limited, in consideration of the integration described above, the thickness of the cathode 28 can be 1 µm or more and 700 µm or less. Within this range, suitable mechanical strength and power generating characteristics can be obtained when the single cell 20 is constructed and also when the stack 10 is constructed with separators 40. 20 µm or more and 500 µm or less is more preferable, 100 µm or more and 300 µm or less is even more preferable, and 200 µm or more and 250 µm or less is particularly preferable. The cathode 28 includes a cathode gas flow channel 29 and a cathode gas seal part 30. These elements will be described later.

The thicknesses of the anode 22, the solid electrolyte 26, and the cathode 28 described above are preferably all 1 µm or more and 150 µm or less. If all these elements are within this range of thickness, the elements can be integrated by sintering to form a single cell without being significantly restricted by adjustments of differences in thermal expansion and contraction characteristics thereof during firing or use. Since such single cells with integrity can be formed, strength of the stack structure 100 formed by laminating these single cells 20 can be readily secured. More preferably, the thicknesses of all elements are 1 µm or more and 100 µm or less. Even more preferably, the thicknesses of all elements are 40 µm or less and, particularly preferably, 20 µm or less.

### (Separator)

In the stack 10, a plurality of single cells 20 are laminated in a state of being separated from each other by the separator 40. The separator 40 preferably has a planar shape which can be laminated in a similar manner as the anode 22, the solid electrolyte 26, and the cathode 28. This is because such a planar separator is easy to fabricate and does not necessitate a complex lamination process in order to obtain the stack 10. As a material of the separator 40, various known conductive materials used as SOFC separators can be used. For example, in addition to stainless metal materials, lanthanum chromite metal ceramic materials can also be used.

As will be described later, in order to obtain the stack 10, the various components of the single cell 20 and the separator 40 are preferably fired together and then co-sintered. In this aspect, the separator 40 is preferably made of a ceramic material that is sintered at a relatively low temperature. For purposes of improving sinterability, lanthanum-chromium oxide (LaCrO₃), lanthanum-strontium-chromium oxide (La₍₁₋ₓ₎SrₓCrO₃, 0 < x ≤ 0.5) and other lanthanum-chromium perovskite oxides, or ceramics comprising such lanthanum-chromium perovskite oxides and rare-earth solid solution zirconia, are preferably used as such ceramic materials. The lanthanum-chromium perovskite oxide can be sintered more densely and at a lower temperature than what is conventional by including rare-earth solid solution zirconia (general formula (1-x)ZrO₂ · xY₂O₃, where Y denotes a rare earth element and 0.02 ≤ x ≤ 0.20) during firing. As a result, the separator 40 can be densified at a temperature of around 1400°C or lower, which is low enough to allow co-sintering of the cell components. Such a lanthanum-chromium perovskite oxide may contain a solid solution of other metal elements.

Examples of the rare earth element in the rare-earth solid solution zirconia include yttrium (Y), scandium (S), ytterbium (Yb), cerium (Ce), neodymium (Nd), samarium (Sm) and the like, of which yttrium (Y), scandium (Sc) and ytterbium (Yb) are preferred, and yttrium (Y) is especially preferred. The x in the rare-earth solid solution zirconia (general formula (1-x)ZrO₂ · xY₂O₃, where Y denotes a rare earth element) is preferably 0.02 or more and 0.20 or less, or more preferably 0.02 or more and 0.1 or less.

Considering that integration is be to performed by sintering the cell 20 and the stack 10, a thermal expansion coefficient (20°C to 1000°C) of the separator 40 is preferably 8 × 10⁻⁶ K⁻¹ or higher and 12 × 10⁻⁶ K⁻¹ or lower. This is because peeling with respect to the anode 22 or the cathode 28 can be suppressed within this range. Considering residual stress of the stack 10, 9.5 × 10⁻⁶ K⁻¹ or higher and 11.5 × 10⁻⁶ K⁻¹ or lower is more preferable. While a thickness of the separator 40 is not particularly limited, in consideration of the integration described above, the thickness of the separator 40 can be 1 µm or more and 200 µm or less. Within this range, suitable mechanical strength and power generating characteristics can be obtained when the single cells 12 are laminated so as to be separated from each other to construct the stack structure 100. 10 µm or more and 50 µm or less is more preferable, and 10 µm or more and 40 µm or less is even more preferable.

The thickness of each of the layers, including the respective components of the single cell 20 and the separator 40, is preferably 250 µm or less.

The single cells 20 in the stack 10 can be connected in series. Although not particularly illustrated, a serial connection of the single cells 20 in the stack 10 can be performed by suitably arranging collectors.

### (Gas flow channel and gas seal part)

The anode 22 and the cathode 28 can respectively include the anode gas flow channel 23 and the cathode gas flow channel 29. In addition to forms of flow channels that penetrate inside the anode 22 and the cathode 28 as shown in FIG. 2, the anode gas flow channel 23 and the cathode gas flow channel 29 can respectively adopt various known forms. The anode gas flow channel 23 and the cathode gas flow channel 29 may be provided between the anode 22 or the cathode 28 and the solid electrolyte 26 or between the anode 22 or the cathode 28 and the separator 40. A height of the anode gas flow channel is preferably 50 µm or more and 200 µm or less and more preferably 80 µm or more and 120 µm or less. A height of the cathode gas flow channel is preferably 80 µm or more and 300 µm or less and more preferably 100 µm or more and 200 µm or less.

In addition, the anode 22 and the cathode 28 can respectively include the gas seal parts 24 and 30 which cut off cathode gas and anode gas and which enable anode gas and cathode gas to be selectively introduced. Moreover, as shown in FIG. 2, the respective gas seal parts 24 and 30 can be provided in layers of the anode 22 and the cathode 28. According to such forms, integrity and strength of the stack 10 are secured by integration of the respective layers itself without including a special support structure while holding the seal parts in the stack. Besides the form shown in FIG. 2, the gas seal parts 24 and 30 may be formed by causing a prescribed region of a frame 60 holding the stack 10 to abut or adhere to a region of the cell 20 to be gas-sealed via a sealing agent such as glass when necessary.

The cathode gas flow channel 29 supplies cathode gas or, in other words, gas containing oxygen or the like which acts as a cathode and which is typified by air to the cathode 28. Unlike what is conventional, the cathode gas flow channel 29 according to the present disclosure is configured so that a gas flow rate to be supplied to the cathode 28 is secured. In other words, a configuration is adopted so that cooling air for cooling the cell 20 or the stack 10 is separately supplied.

The anode gas flow channel 23, the cathode gas flow channel 29, and the gas seal parts 24 and 30 are suitably determined in accordance with a gas supply form which is set with respect to the anode 22 and the cathode 28. The gas flow channels 23 and 29 and the gas seal parts 24 and 30 are preferably provided so that anode gas and cathode gas intersect each other, and more preferably provided so that anode gas and cathode gas are orthogonal to each other.

When providing the gas seal parts 24 and 30 in the single cell 20 or, in other words, in the stack 10, while a material composition of the seal parts is not particularly limited, the seal parts can be made equivalent to the separator 40 or the solid electrolyte 26 at least in terms of thermal expansion and contraction characteristics as disclosed in WO2009/119771.

According to the stack 10 described above, even when components of the single cell 20 or, in other words, the solid electrolyte 26, the anode 22, and the cathode 28 are all thin and strength is not secured for the single cell 20 itself, sufficient mechanical strength can be readily secured by creating the stack 10 by lamination. In other words, a single cell support for securing mechanical strength in a single cell such as a conventional electrolyte-supported cell or a conventional electrode-supported cell need not be included.

In addition, according to the stack 10 described above, differences in thermal expansion and contraction characteristics among the anode 22, the cathode 28, the solid electrolyte 26, and the separator 40 can be alleviated to improve thermal shock resistance. Furthermore, since securing of the mechanical strength of the single cell 20 is not restricted by the thicknesses required by the solid electrolyte 26, the anode 22, and the cathode 28, the thicknesses of these elements and the thickness of the stack 10 can be set by taking cooling efficiency and a temperature gradient in a lamination height direction into consideration.

Moreover, thermal expansion and contraction characteristics include at least a thermal expansion coefficient. In addition, "equivalent" with respect to thermal expansion and contraction characteristics means that the thermal expansion and contraction characteristics are the same as those of the separator 40 or the solid electrolyte 26 or a difference thereof is within a range that does not greatly affect the integrity of the stack 10 within a range of temperatures applied to the SOFC during fabrication and operation of the SOFC. Experiments conducted by the present inventors revealed that a range in which the difference does not greatly affect the integrity of the stack 10 is 0.85 times or more to 1.18 times or less with respect to the thermal expansion coefficient of the separator 40 or the solid electrolyte layer 26.

The seal parts 24 and 30 preferably have the same composition as the separator 40 or the solid electrolyte 26. With the same composition as one of these elements, good integration can be achieved when the seal parts are integrated with one of the separator 40 and the solid electrolyte 26, thereby improving the heat shock resistance as well as the mechanical strength of the stack structure 100.

The stack 10 preferably integrates a plurality of the cells 20 by sintering via the separator 40. Due to integral sintering, thermal contact resistance of each element in the cell 20 as well as thermal contact resistance of the separator 30 can be reduced, and thermal contact resistance can be reduced as a whole. Furthermore, since integral sintering of the stack 10 enables strength to be secured even when a support layer is eliminated, thicknesses of the cell 20 and the stack 10 can be reduced and cooling efficiency can be improved. In order to secure good integration of the cell 20 and the stack 10 by sintering, preferably, with respect to the gas seal parts 24 and 30, homogeneity of thermal expansion characteristics or identity of compositions with the solid electrolyte 26 and/or the separator 40 is secured to secure integration with the solid electrolyte 26 and the separator 40.

### (Cooling gas flow channel)

As shown in FIG. 1, the stack 10 according to the present disclosure can include the cooling gas flow channel 32 which is independent of the cathode gas flow channel 29. The cooling gas flow channel 32 is configured so as to supply cooling gas to a surface of at least one of opposing surfaces of the cells 20 of the stack 10 in a laminating direction. By causing the cooling gas flow channel 32 to be independent of the cathode gas flow channel 29 in this manner, a cathode gas flow rate can be reduced, a size (height) of the cathode gas flow channel 29 can be reduced, the thicknesses of the cell 20 and the stack 10 can be reduced, and a temperature of cooling gas can be set sufficiently lower than an operating temperature, thereby enabling the stack 10 to be cooled more efficiently.

Since the cooling gas flowing through the cooling gas flow channel 32 is separated from cathode gas, the cooling gas can be made sufficiently lower than the operating temperature of the SOFC. For example, compared to a highest temperature of a stack in an SOFC system including the stack 10, the cooling gas can be made lower preferably by 100°C or higher, more preferably by higher than 100°C, even more preferably by 150°C or higher, and particularly preferably by 200°C or more. In addition, a maximum reduction of cooling gas with respect to the highest temperature of a stack can be set to around 250°C or less. Typically, ranges such as 100°C or higher and 250°C or lower, 100°C or higher and 200°C or lower, and 150°C or higher and 200°C or lower can be adopted. When the highest temperature of the stack is 600°C or higher and 1000°C or lower, the temperature of the cooling gas can be set to 350°C or higher and 800°C or lower. 550°C or higher and 650°C or lower is preferable. Since the cooling gas can be set to a sufficiently lower temperature than the highest temperature of the stack as compared to what is conventional (conventionally, a temperature difference of around 50°C to lower than 100°C), the stack 10 can be cooled effectively.

Moreover, in this case, the temperature of the cooling gas is a temperature of the cooling gas immediately before the cooling gas is introduced into the stack 10. Typically, the temperature of the cooling gas is a temperature in a vicinity of an inlet of the cooling gas to the stack 10. In addition, the highest temperature of a stack in an SOFC system is assumed to be a highest temperature at a plurality of temperature measurement points in a stack structure of an SOFC system including a stack structure according to the present disclosure.

The cooling gas flow channel 32 is preferably also provided on another opposing surface in the laminating direction of the stack 10. The stack 10 can be cooled even more efficiently by cooling the stack 10 on both surfaces.

While the cooling gas flow channel 32 can be formed as a solid phase internally provided with a cavity as a flow channel, preferably, the cooling gas flow channel 32 is configured so as to directly cool a surface of the stack 10 as shown in FIG. 1. Accordingly, the stack 10 can be cooled effectively with a smaller cooling gas flow rate and with a further reduced flow channel height.

While a configuration for directly supplying the cooling gas to the surface of the stack 10 to cool the stack 10 is not particularly limited, for example, as shown in FIG. 1, a configuration in which the surface of the stack 10 is exposed to a cooling gas flow can be adopted. For example, when the stack structure 100 is constructed by laminating a plurality of the stacks 10, a configuration can be adopted in which the cooling gas flow channel 32 causes the cooling gas to pass through gaps between the laminated stacks 10 and upper and lower surfaces of the stack structure 100. Moreover, as will be described later, the collector provided on the stack 10 is preferably configured so that the collector does not inhibit circulation of the cooling gas in the cooling gas flow channel 32 and that the collector has superior thermal conductivity.

More specifically, the stack structure 100 is supported by a frame (which may be a manifold including a flow channel) 60 capable of securing a gap between the stacks 10. Accordingly, the gaps between the stacks 10 and the upper and lower surfaces of the stack structure 100 can be made to constitute the cooling gas flow channel 32. For example, the frame 60 supports the stack structure 100 while forming gaps on uppermost and lowermost surfaces of the stack structure 100 as well as between the stacks 10. In addition, when the frame 60 includes a flow channel, a configuration is adopted so that circulation of cooling gas is secured while securing selective gas circulation to the anode gas flow channel 23 and the cathode gas flow channel 29.

Such a frame and a manifold are preferably made of ceramic materials. A joining surface between the frame or the manifold and the stack is preferably sealed by a glass ceramic material and, more preferably, constituted by a material which can be integrated with the stack 10 by sintering and which is integrated by sintering.

When both opposing surfaces of the stack 10 are to be cooled, while the cooling gases of the two cooling gas flow channels that oppose each other from either side of the stack 10 are approximately parallel to each other, the cooling gases may be oriented in approximately a same direction (a parallel state) or oriented in different directions so that at least the directions intersect each other (an intersecting state). An intersecting state is preferable. Accordingly, a temperature distribution in the stack 10 and, in particular, temperature distributions in a planar direction and a laminating direction of the stack 10 can be reduced and cooling can be performed more uniformly. More preferably, the cooling gases that sandwich the stack 10 are configured so as to flow in an opposing state in which orientations of the cooling gases are approximately opposite to each other.

When a plurality of the stacks 10 is laminated, such orientations of the cooling gases are preferably realized with respect to as many stacks 10 as possible. More preferably, such orientations (an intersecting state or an opposing state) of the cooling gases are realized with respect to all of the stacks 10.

In a relationship with the anode gas flowing inside the stack 10, the cooling gas is preferably in an intersecting state or an opposing state with an anode gas flow. In addition, in a relationship with the cathode gas, the cooling gas is preferably in a parallel state with a cathode gas flow.

While a height of the cooling gas flow channel is not particularly limited, as shown in Table 1, the height is preferably 2 mm or more and 8 mm or less. When the height is within this range, a target operating temperature such as 800°C can be achieved and an increase in stack volume can be suppressed while maintaining a temperature distribution (a temperature difference between a highest temperature and a lowest temperature) in the stack 10 at a constant level or lower, for example, maintaining the temperature distribution in the stack 10 to 60°C or less and preferably to 50°C or less. In addition, in accordance with a stack size, the height is 2 mm or more and 4 mm or less, 3 mm or more and 6 mm or less, or 4 mm or more and 8 mm or less. Moreover, generally, the temperature of the stack 10 is measured at a plurality of positions. The temperature distribution in the stack 10 refers to a temperature difference between a highest temperature and a lowest temperature among these measurement positions.

In addition, when considering the temperature distribution of the stack 10, as shown in Table 1, a thickness of the cell 20 in the stack 10 is preferably 20 mm or less. Within this range, the temperature distribution of the stack 10 can be maintained at 60°C or, more preferably, 50°C or less. Furthermore, in accordance with an area output density per cell, the height is 20 mm or less or 8 mm or less.

When a preferable thickness of the stack 10 is converted into a number of layers of the cell 20, when the thickness of the cell 20 is 0.5 to 0.6 mm, approximately 30 layers or less is preferable, 20 layers or less is more preferable, and 15 layers or less is even more preferable.

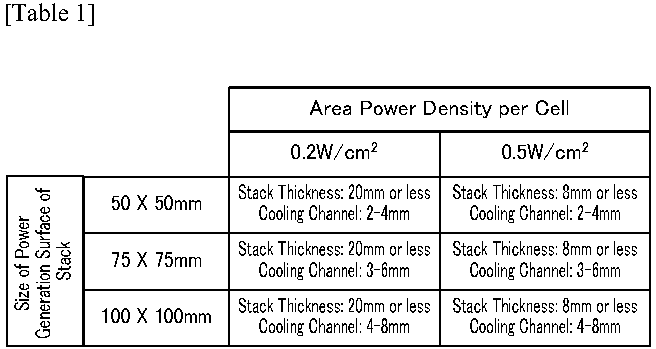

### (Manufacturing stack and stack structure)

The stack 10 can be manufactured in accordance with known SOFC manufacturing methods. For example, the stack 10 shown in FIG. 2 can be manufactured according to a process described in a brochure of WO 2009/119771. Specifically, the stack 10 can be obtained by preparing an unfired stack precursor by repetitively: preparing a solid electrolyte material sheet in which the solid electrolyte layer 26 is formed by firing or preparing a separator material sheet in which the separator 40 is formed by firing; and laminating an anode material strip in which the anode 22 is formed by firing and an anode gas seal strip on the sheet or laminating a cathode material strip in which the cathode 28 is formed by firing and an cathode gas seal strip on the sheet, and firing the stack precursor. The frame 60 (to be described later) can be integrated with the stack precursor at the same time as firing thereof to co-fire the frame. In addition, the stack precursor may be pressed and bonded or may be calcined as necessary.

An unfired ceramic sheet or a ceramic strip-shaped body can be obtained according to ordinary methods. Specifically, an unfired ceramic sheet can be obtained using a sheet molding method involving casting such as tape casting in which a knife coater, a doctor blade, or other applicator is used to mold a slurry consisting principally of a suitable ceramic material to which a binder resin, an organic solvent, and the like are added in suitable amounts. According to ordinary methods, the obtained sheet is first dried and then subjected to a heat treatment as necessary to obtain various sheets or strip-shaped bodies (parts of sheets) to be used in lamination.

In particular, an unfired sheet including an anode material strip and an anode gas seal material strip and an unfired sheet including a cathode material strip and a cathode gas seal material strip can be obtained by a sheet molding method involving tape casting or other casting methods using a doctor blade or other applicator. In other words, slurries of different compositions are discharged simultaneously in a casting direction and are applied in such a way that the different slurry strips are integrated without being mixed after casting. In this case, integral application of such strips of different compositions can be achieved by adjusting the fluidity of the slurries for forming the different strips. The obtained applied products can be dried and then subjected to a heat treatment as necessary according to ordinary methods to obtain a second sheet.

Such a lamination process may involve separately fabricating the respective sheets and subsequently laminating the sheets or sequentially laminating a sheet on top of a sheet of a lower layer. In addition, a lamination sequence can also be changed as necessary. Furthermore, a gas conduit can be formed using a dissipation material which dissipates during firing. With such evaporative materials, an acquisition method for a stack precursor is not limited to that described above and a person having ordinary skill in the art can change the acquisition method as appropriate.

In addition, a lamination sequence in the lamination process may be arbitrary performed within a range where a stack structure is obtained, and is not particularly limited. For example, lamination of a first sheet and the second sheet can be performed sequentially or, after fabricating partial laminates, the laminates may be laminated together.

A stack precursor can be made into the stack 10 by firing. The firing is preferably performed so as to sinter at least a part of the ceramic material constituting the stack precursor and obtain a desired dense or porous fired body. Due to such firing, sheets constituting a laminate are integrated and the stack 10 can be obtained all at once. Preferably, all of the cell components and the separator are co-sintered. For example, heat treatment can be performed at a temperature of 1250°C or higher and 1550°C or lower, and preferably 1300°C or higher and 1500°C or lower. 1300°C or higher and 1400°C or lower is more preferable. Moreover, firing can be performed in air.

The stack 10 can be ultimately configured by adding, to the stack 10, suitable elements for current collection known to a person having ordinary skill in the art. A collector may be metallic. A metallic collector enables heat exchange to be promoted when cooling the surface of the stack 10. As the metallic collector, various metallic meshed bodies made of silver, copper, nickel, or the like having superior thermal conductivity can be used. In addition, a meshed body enables cooling to be performed efficiently without inhibiting cooling of the stack by the cooling gas. Moreover, in order to secure oxidation-resistance when exposed to the cooling gas, a collector such as a metallic linear body made of Ni or the like preferably includes oxidation-resistant coating. Furthermore, stacks 10 that are laminated in the stack structure 100 may be connected to each other by a wire made of, for instance, a metal such as Ni.

### (Frame)

As described earlier, firing can also be performed after integration with the ceramic frame 60. As shown in FIG. 1, the stack structure 100 can include the frame 60 for holding two or more laminated stacks 10.

Preferably, an entirety of the frame 60 is substantially constituted by a solid phase 42. A solid phase of the frame 60 is dense enough to enable the anode gas flow channel 23 and the cathode gas flow channel 29 to be formed therein.

The frame 60 is preferably configured so that gaps can be formed on, preferably, upper and lower surfaces of the stack 10 which is held by the frame 60. Typically, a spacer 64 which separates adjacent stacks 10 from each other while holding the stacks 10 is provided as a part of the frame 60 or as a member to be used in combination with the frame 60. Using the frame 60 described above enables the cooling gas flow channel to be readily configured.

The frame 60 can also be constituted by members which hold the stack 10 as a frame base 62 and a frame cover 64. Accordingly, cooling gas flow channels can be readily formed on both surfaces of the stack 10 and between the stacks 10.

While a solid phase material of the frame 60 is not particularly limited, the solid phase material is preferably a ceramic material. A ceramic material is suitable for integration with the stack 10. In addition, a ceramic material is advantageous because integration can be performed by sintering in a case where the frame 60 is constituted by a plurality of divided members as described above. Furthermore, a ceramic material is also advantageous when coupling frames 60 to each other to further laminate the stacks 10. In particular, a ceramic material is advantageous when the stack 10 is substantially constituted by a ceramic material. More preferably, a ceramic material with a thermal expansion coefficient conforming to a certain range of a thermal expansion coefficient of the stack 10 (for example, around 80% to 120% of a thermal expansion coefficient of the solid electrolyte 26) is used. Moreover, from the perspectives of thermal expansion coefficient control, integrity, and integration with the stack 10, all of the solid phase material of the frame 60 is preferably constituted by a same material even in a case where the frame 60 is acquired as a laminate.

For example, the thermal expansion coefficient (20°C to 1000°C) of a ceramic material as the solid phase of the frame 60 is preferably 8 × 10⁻⁶ K⁻¹ or more and 12 × 10⁻⁶ K⁻¹ or less. This is because peeling with respect to the stack 10 can be suppressed during SOFC operation and integration within this range. In addition, considering residual stress of the frame 60, 9.5 × 10⁻⁶ K⁻¹ or more and 11.5 × 10⁻⁶ K⁻¹ or less is more preferable. Furthermore, in order to prevent electrical short circuit between the stacks 10 and the like, electric resistance of the ceramic material is preferably 10⁶ Ωm or more.

The ceramic material as the solid phase of the frame 60 can be appropriately selected from known ceramic materials in consideration of insulation properties and the like in addition to the thermal expansion coefficient described above and sinterability with the stack 10. For example, the ceramic material preferably includes one or two or more selected from the group consisting of titanium oxide, lanthanum-based oxide, magnesium oxide, magnesium silicate, lanthanum-based perovskite oxide, and rare-earth solid solution zirconia. More preferably, one or two or more selected from the group consisting of magnesium oxide, magnesium silicate, lanthanum-based perovskite oxide, and rare-earth solid solution zirconia are included.

The stack 10 and the frame 60 may be integrated in any form. The integration need only be performed so that, for example, an anode gas flow channel and a cathode gas flow channel present in the frame 60 are communicated with the anode gas flow channel 23 and the cathode gas flow channel 29 included in the stack 10. Such integration between the stack 10 and the frame 60 is realized by fastening an inner circumferential surface of the frame 60 and an outer circumferential surface of the stack 10 to each other. In addition to integral sintering, such fastening may be realized by a glass sealing agent or by mechanical fastening means.

Cases where the stack 10 and the frame 60 are constituted by ceramic materials may include a case of firing or sintering, mainly for integration, the stack 10 and the frame 60 having already been fired or sintered, and a case where an unfired stack precursor and an unfired frame precursor are fired or sintered (co-sintered) for the purposes of firing or sintering the precursors and integration. A stack precursor and a frame precursor are preferably co-sintered from the perspective of simplifying a process or improving integrity. Either or both the stack precursor and the frame precursor may be unsintered but calcined as necessary.

### (SOFC system)

The planar SOFC system according to the present disclosure includes, as an SOFC, a planar stack structure including one or two or more stacks in which two or more cells having an anode, a solid electrolyte, and a cathode are laminated via a separator. The present system is capable of generating power at an operating temperature of 600°C or higher and 1000°C or lower and as a compact SOFC while cooling the stack by directly bringing cooling gas which is independent of cathode gas into contact with at least one of opposing surfaces of the cells in the stack in a laminating direction.

In the system according to the present disclosure, a surface of the stack can be directly cooled using an SOFC stack structure according to the present disclosure.

In addition to the present stack structure, the SOFC system according to the present disclosure can further include known elements of an SOFC system such as an anode gas reformer, a heat exchanger, and a turbine.

### (Operating method for planar SOFC)

In an operating method for the planar SOFC system according to the present disclosure, a planar stack structure including one or two or more stacks in which two or more cells having an anode, a solid electrolyte, and a cathode are laminated via a separator is provided as an SOFC. The present operating method enables the stack to be cooled by directly bringing cooling gas which is independent of cathode gas into contact with at least one of opposing surfaces of the cells in the stack in a laminating direction. Accordingly, power can be efficiently generated at an operating temperature of 600°C or higher and 1000°C or lower and as a compact SOFC.

### First Embodiment

While the present disclosure will be described in detail below using specific examples, it is to be understood that the present disclosure is not limited to the following examples.

In the present example, Ni/8YSZ cermet (Ni:8YSZ = 80:20 (mole ratio)) was used as an anode, La_{0.8}Sr_{0.2}MnO₃ (LSM) was used as a cathode, 8YSZ was used as an electrolyte, and La_{0.79}Ca_{0.06}Sr_{0.15}CrOₓ (LCaSCr) was used as a separator. Slurries thereof were respectively prepared, and a separator sheet and a solid electrolyte sheet were prepared by tape casting as green sheets with a thickness of 20 µm to 80 µm.

In addition, as the green sheet for the cathode, a 500 µm-thick green sheet having a cathode material strip with a seal material strip made of an electrolyte material at one end was prepared. Furthermore, as the green sheet for the anode, a 350 µm-thick green sheet having an anode material strip with a seal material strip made of an electrolyte material at one end was prepared. Slurry concentrations were adjusted for each sheet to ensure uniform shrinkage of the green sheets during heat treatment. The separator green sheet, the anode green sheet, the solid electrolyte sheet, and the cathode green sheet obtained as described above were laminated in 12, 15, 20, 30, and 40 units. At this point, stack precursors respectively having total thicknesses of approximately 5 to 10 mm, 6 to 12 mm, 9 to 18 mm, 13 to 26 mm, and 17 to 34 mm were prepared using sheets with different thicknesses. Moreover, the stack precursors were moderately heated and pressed to secure favorable integrity.

Next, the SOFC stack precursors were fired in air at 1350°C. A resulting SOFC stack structure was favorably integrated and a highly integrated stack without interlayer peeling was obtained.

As a frame to function as a manifold for introducing gas into the stack, a mold was used to sinter a 3YSZ slurry in air at 1500°C to prepare a ceramic frame pair constituted by a set of a frame base and a frame cover.

The stack was arranged on the frame base, and contacts were bonded and sealed using a glass ceramic material. Subsequently, the frame cover was arranged and then bonded and sealed in a similar manner. The frame pair and the stack were subjected to drying treatment at 200°C.

By further repeating arranging the stack on the frame base, setting the frame cover in place, and applying the drying treatment three times, a framed stack integrating three stacks and three frames was obtained. Resulting total thickness was approximately 27 mm when using 20-cell stacks with a cell thickness of 0.3 mm.

### Second Embodiment

The following experiments were performed with respect to the stack structure obtained in Example 1.

### (1) Orientation of cooling gas and cooling effect

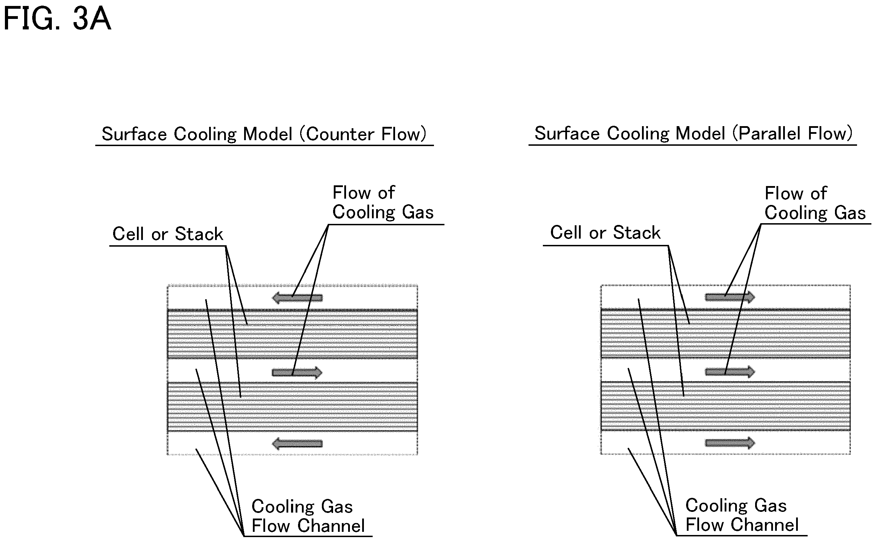

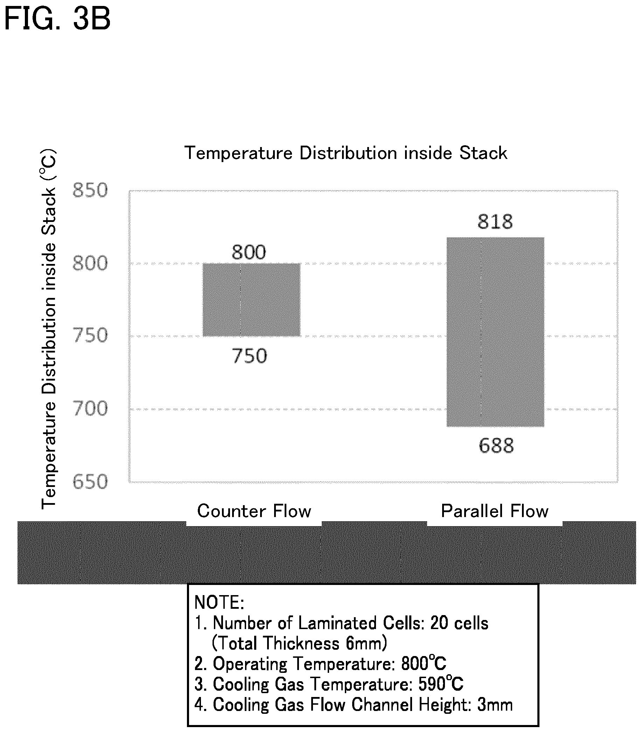

Using the stack structure fabricated in Example 1 (lamination of three 20-cell stacks with a thickness of 6 mm, height of cooling gas flow channel: 3 mm, and cooling gas temperature: 590°C), cooling effects were evaluated in a form shown in FIG. 3A in a mode where the cooling gas is configured as a counterflow and in a mode where the cooling gas is configured as a parallel flow. In other words, a case where orientations of cooling gas are opposite to each other between above and below the stack was compared with a case where the orientations are the same. Moreover, a flow rate of the cooling gas was set to 20 m/s, and a temperature difference between a lowest temperature and a highest temperature inside the stack structure was measured after the stack structure starts operation at 800°C and reaches a steady state. Results are shown in FIG. 3B.

As shown in FIG. 3B, in the case of a counterflow, the highest temperature inside the stack was 800°C and the temperature difference was 50°C, but in the case of a parallel flow, the highest temperature was 818°C and the temperature difference was 130°C. A vicinity of an inlet of the cooling gas flow channel exhibited the lowest temperature while a vicinity of a center of the stack exhibited the highest temperature. From the above, it was found that a counterflow enables cooling to be performed effectively and, at the same time, reduces temperature distribution and realizes uniform cooling.

### (2) Number of laminated cells in stack and temperature distribution

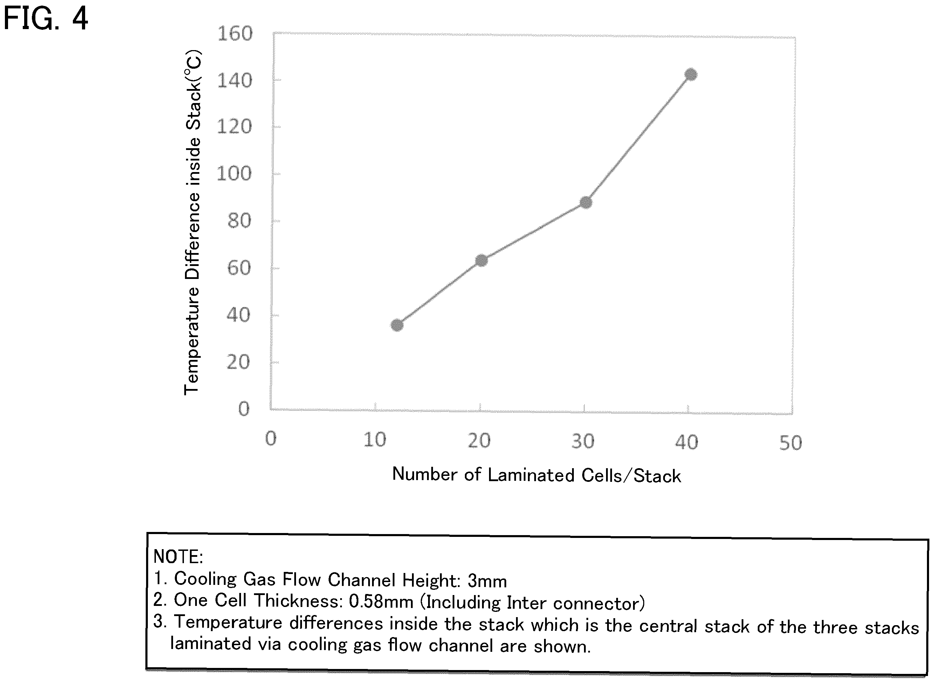

With respect to the stack structure fabricated in Example 1 (lamination of three stacks respectively fabricated by laminating 12 layers, 20 layers, 30 layers, and 40 layers of cells (0.58 mm/cell) via a cooling gas flow channel (height: 3 mm)), cooling gas was supplied in a counterflow. At a cooling gas temperature of 590°C, a flow rate of 20 m/s, and a stack structure heating temperature of 800°C, a highest temperature and a lowest temperature were measured in a plane including a central thickness height of a center stack of the stack structure. Results are shown in FIG. 4.

As shown in FIG. 4, the temperature difference exceeded 60°C when the number of laminated cells per stack exceeded 20. In addition, when the number of layers was around 15, the temperature difference dropped to or below 50°C. From the above, it was found that the temperature difference can be homogenized by setting the number of laminated cells per stack to or below a certain number.

### (3) Height of cooling gas flow channel and temperature distribution

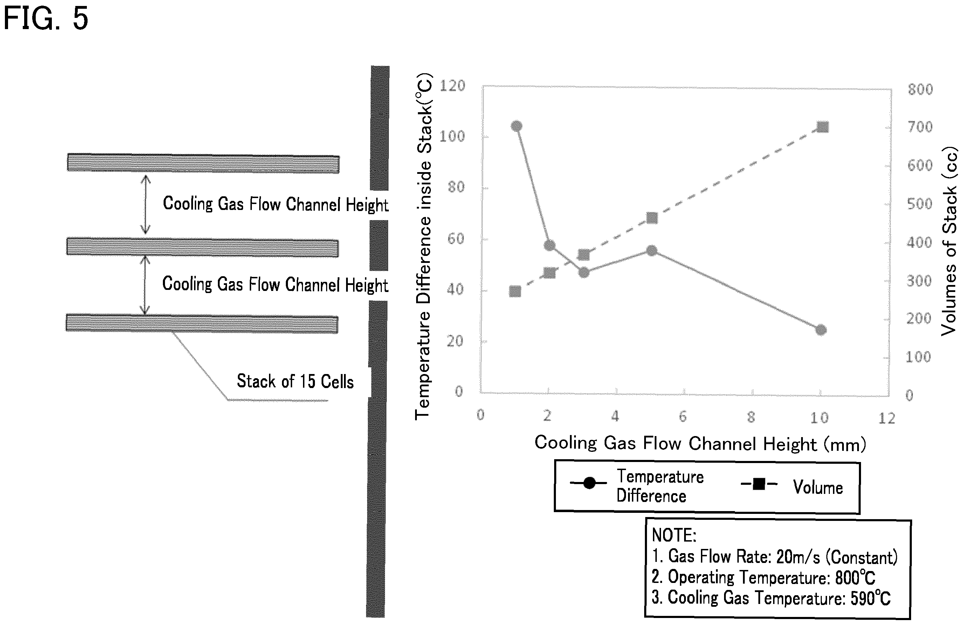

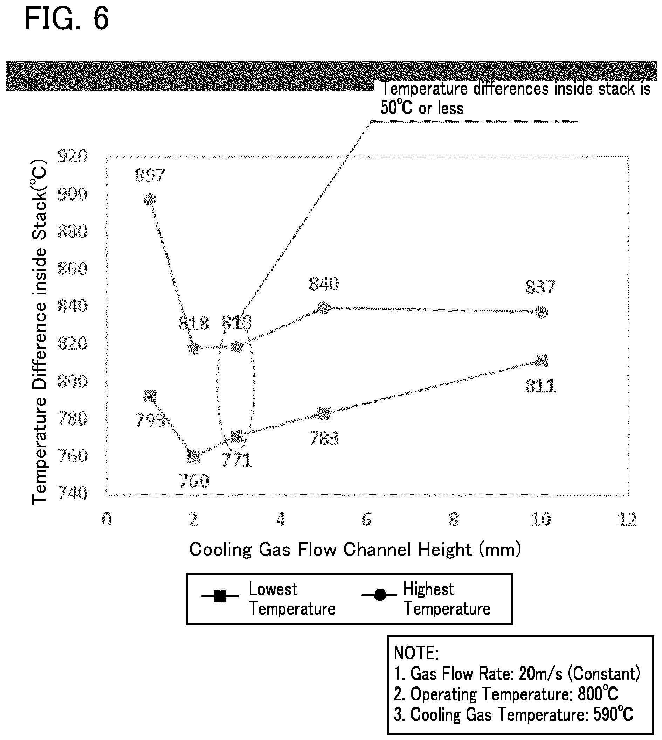

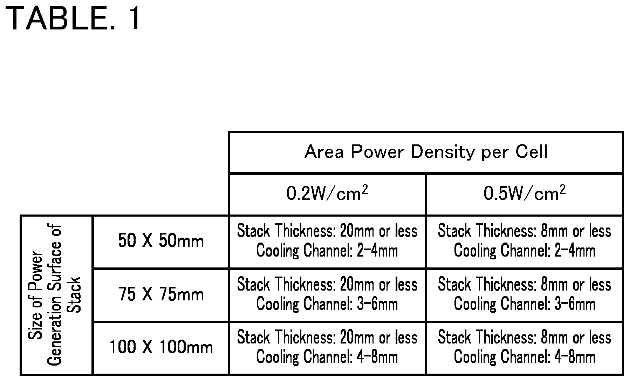

Using the stack structure fabricated in Example 1 (a stack structure obtained by laminating three stacks fabricated by laminating 15 layers of cells with a cell thickness of 0.3 mm via cooling gas flow channels of various heights), cooling gas was supplied in a counterflow. At a cooling gas temperature of 590°C, a flow rate of 20 m/s, and a stack structure heating temperature of 800°C, a temperature difference between a highest temperature and a lowest temperature was measured in a plane including a central thickness height of a center stack of the stack structure. Results are shown in FIG. 5 and FIG. 6.

As shown in FIG. 5 and FIG. 6, with this stack structure, it was found that the temperature difference can be minimized and a high cooling effect is obtained when the height of the cooling gas flow channel is approximately 3 mm. From the above, it was found that the height of the cooling gas flow channel has a major impact on cooling efficiency and that cooling efficiency and temperature distribution can be controlled by the flow channel height.

## Claims

1. A stack structure for a planar solid oxide fuel cell, comprising:
one or two or more stacks in which two or more cells each having an anode, a solid electrolyte, and a cathode are laminated via a separator,
the one or two or more stacks including:
an anode gas flow channel which supplies anode gas to the anode;
a cathode gas flow channel which supplies cathode gas to the cathode; and
a cooling gas flow channel which is independent of the cathode gas flow channel,
wherein
the cooling gas flow channel supplies cooling gas to at least one of opposing surfaces of the cells of the one or two or more stacks in a laminating direction.

2. The stack structure according to claim 1, wherein the cooling gas flow channel is configured to directly cool the one surface of the stack with cooling gas.

3. The stack structure according to claims 1 or 2, wherein the cooling gas flow channel is also provided on another one of the surfaces, which opposes the one surface of the one or two or more stacks.

4. The stack structure according to claim 3, wherein two cooling gas flow channels which oppose each other via the stack are configured so that the cooling gases passing through the cooling gas flow channels are approximately parallel to each other and flow in directions with different orientations.

5. The stack structure according to claim 4, wherein the cooling gases are configured so as to flow in orientations approximately opposite to each other.

6. The stack structure according to any one of claims 1 to 5, wherein the cooling gas flow channel is provided as a gap between two laminated stacks.

7. The stack structure according to any one of claims 1 to 6, wherein the stack has on a surface thereof a metallic mesh collector.

8. The stack structure according to any one of claims 1 to 7, wherein the stack has a collector including a metallic linear body having on a surface thereof an oxidation-resistant coating.

9. The stack structure according to any one of claims 1 to 8, wherein the stack is configured by integrally sintering a plurality of the cells.

10. The stack structure according to any one of claims 1 to 9, wherein the two or more stacks are integrated by a ceramic support.

11. The stack structure according to any one of claims 1 to 10, wherein a height of the cooling gas flow channel is 2 mm or more and 8 mm or less.

12. The stack structure according to any one of claims 1 to 11, wherein a thickness of the stack is 20 mm or less.

13. The stack structure according to any one of claims 1 to 12, wherein the two or more stacks are planarly arranged.

14. A system for a solid oxide fuel cell, wherein
the solid oxide fuel cell has a planar stack structure including one or two or more stacks in which two or more cells each having an anode, a solid electrolyte, and a cathode are laminated via a separator, and
power at an operating temperature of 600°C or higher and 1000°C or lower is generated while cooling the stack by directly bringing cooling gas, which is substantially independent of cathode gas, into contact with at least one of opposing surfaces of the cells in the stack in a laminating direction.

15. The system according to claim 14, which is configured to supply the cooling gas at a temperature, which is lower than a highest temperature of the stack, by 100°C or more.

16. The system according to claim 15, which is configured to supply the cooling gas at a temperature which is lower than the highest temperature, by 150°C or more.

17. The system according to claim 16, which is configured to supply the cooling gas at a temperature which is lower than the highest temperature by 200°C or more.

18. An operating method for a solid oxide fuel cell,
the solid oxide fuel cell having a planar stack structure including one or two or more stacks in which two or more cells each having an anode, a solid electrolyte, and a cathode are laminated via a separator,
the method including cooling the stack by directly bringing cooling gas, which is substantially independent of cathode gas, into contact with at least one of opposing surfaces of the cells in the stack in a laminating direction.
